# EUROPEAN PATENT SPECIFICATION

(11) **EP 2 058 876 B1**
(45) Date of publication and mention of the grant of the patent: **06.10.2010**
(21) Application number: 08167811.2
(22) Date of filing: 29.10.2008
(51) Int. Cl.: H01M 2/04, H01M 2/12, H01M 10/42

(54) **Secondary battery and method of manufacture**
Sekundärbatterie und Verfahren zu deren Herstellung
Batterie secondaire et son procédé de fabrication

(30) Priority: 06.11.2007 KR 20070112643
(43) Date of publication of application: 13.05.2009
(73) Proprietor: Samsung SDI Co., Ltd., Gyeonggi-do (KR)
(72) Inventor: Hyung, Yooeup, Yeongtong-gu, Suwon-si, Gyeonggi-do, (KR); Park, Junehyoung,, Yeongtong-gu, Suwon-si, Gyeonggi-do, (KR); Kim, Jongku,, Yeongtong-gu, Suwon-si, Gyeonggi-do, (KR); Chu, Sungmin,, Yeongtong-gu, Suwon-si, Gyeonggi-do, (KR); Kim, Yongtae,, Yeongtong-gu, Suwon-si, Gyeonggi-do, (KR)
(74) Representative: Walaski, Jan Filip

(56) References cited:
- EP-A- 1 804 320
- WO-A-2008/069476

## Description

The present invention relates to a secondary battery, in which an integrally formed cap assembly is joined to a can, and a method of manufacturing the secondary battery.

Recently, compact and lightweight portable electronic devices, such as cellular phones, notebook computers, camcorders, and the like, have been developed and manufactured. Such portable devices use a battery pack to provide power for mobile operations. The battery pack adopts a rechargeable battery for economic efficiency. Typical rechargeable batteries include nickel-cadmium (Ni-Cd) batteries, nickel-hydrogen (Ni-MH) batteries, lithium batteries, lithium-ion batteries, and so on.

Lithium-ion batteries have an operational voltage approximately three times that of the nickel-cadmium batteries or the nickel-hydrogen batteries. Moreover, lithium-ion batteries are widely used, due to their high energy density per unit weight.

A conventional method of manufacturing a secondary battery includes disposing an electrode assembly in a can having an opening, beading the lateral surface of the can, covering the opening of the can with an insulating gasket and a cap member, and clamping the opening of the can, to hermetically seal the electrode assembly in the can.

However, even if a slight error occurs in the beading process, the beading portion may be broken, or metallic foreign material may be left in the electrode assembly, and may degrade the battery's performance. Moreover, in the event that a secondary battery undergoes an excessive beading process during the manufacturing process, the beading portion and the electrode assembly may be shorted by external impacts, which may result in an explosion or a fire.

Accordingly, an aspect of the present invention is to provide a secondary battery including an integrally formed cap assembly that is joined to an opening of a can, and a method of manufacturing the same.

Another aspect of the present invention is to provide a secondary battery having an electrode assembly that is prevented from being moved relative to a can.

Still another aspect of the present invention is to provide a second battery having reduced dead space.

Yet another aspect of the present invention is to provide a second battery having reduced the manufacturing costs.

W02008/069476 discloses a cylindrical secondary battery.

According to the invention, there is provided a secondary battery according to claim 1.

An aspect of the present invention provides a secondary battery comprising: an electrode assembly; a can to house the electrode assembly; and a cap assembly to seal an opening of the can. The cap assembly includes: a cap member; a safety element disposed on the cap member; a safety vent disposed on the safety element; an insulating gasket disposed around the cap member, the safety element, and the safety vent; and a cap body to clamp the circumference of the insulating gasket. The cap body is joined to the can, at the opening.

An aspect of the present invention provides a sub-assembly disposed on the safety vent, the sub-assembly including an insulating plate disposed on the safety vent, a main plate adhered to the insulating plate, and a sub-plate connected to the main plate. The insulating plate may insulate the safety vent from the main plate. The sub-plate may be connected to the safety vent, and may be electrically connected to the electrode assembly.

An aspect of the present invention provides a secondary battery comprising: an electrode assembly; a can to house the electrode assembly; and a cap assembly to seal an opening of the can. The cap assembly includes: a cap member; a safety element disposed on the cap member; a safety vent disposed on the safety element; a current interrupt device disposed between the safety vent and the safety element; an insulating gasket disposed around the cap member, the safety element, the safety vent, and the current interrupt device; a cap body clamped around the insulating gasket. The cap body and the can are joined to each other.

According to an aspect of the present invention, the current interrupt device may comprise an edge board, a cross board crossing the edge board, an upper circuit pattern formed on the cross board and the top of the edge board, and electrically connected to the safety element, and a lower circuit pattern formed on the bottom of the cross board and the edge board and, electrically connected to the safety vent. The upper circuit pattern and the lower circuit pattern may be electrically connected in the center of the cross board, and the safety vent may break the center of the cross board.

According to an aspect of the present invention, the can may be cylindrical, and the cap assembly may be cylindrical.

According to an aspect of the present invention, the insulating gasket may comprise a first insulating portion surrounding the circumference of an upper surface of the cap member, a second insulating portion surrounding a lateral surface of the cap member and the safety vent, and a third insulating portion surrounding the circumference of a lower surface of the safety vent. The insulating gasket may further comprise a stopper projected from the intersection of the second insulating portion and the third insulating portion.

According to an aspect of the present invention, the cap body may comprise a first bent portion surrounding the first insulating portion, a second bent portion surrounding the third insulating portion, and an outer circumferential portion connecting the first bent portion to the second bent portion, and surrounding the second insulating portion. The cap body may comprise a stepped portion formed on the outer circumferential portion. The stepped portion of the cap body may come in contact with the opening of the can, and a welding portion may be formed where the stepped portion of the cap body contacts the can.

According to an aspect of the present invention, a the secondary battery may further comprise an insulating plate, the insulating plate including an aperture formed in the center thereof, and coming in contact with the second bent portion of the cap body and the upper surface of the electrode assembly. The insulating plate may comprise an upper projection disposed in contact with the second bent portion of the cap body, and a lower projection formed on the periphery of the aperture. The insulating plate may comprise a receiving groove having a diameter greater than that of the aperture, formed in the center thereof.

According to an aspect of the present invention, the secondary battery may further comprises an upper insulating plate placed on the electrode assembly, and an incombustible elastic member disposed between the upper insulating plate and the cap body.

In another aspect, the present invention provides a method of manufacturing a secondary battery, the method comprising: a clamping operation to clamp a cap body around an insulating gasket that surrounds a cap member, a safety element, and a safety vent; a joining operation to electrically connect an electrode assembly to the cap assembly; and a welding operation to weld the can to the cap body.

According to an aspect of the present invention, a current interrupt device may be inserted between the safety element and the safety vent.

According to an aspect of the present invention, a sub-assembly may be attached to the safety vent.

According to an aspect of the present invention, the cap member and the safety vent may be secured by a stopper formed inside the insulating gasket, before the cap body is clamped around the insulating gasket.

According to an aspect of the present invention, the can and the cap assembly may be laser welded, while being rotated.

Embodiments of the invention will now be described by way of example, with reference to the accompanying drawings, in which:
FIG. 1A is an exploded perspective view of a secondary battery, in accordance with an exemplary embodiment of the present invention;
FIG. 1B is an exploded perspective view showing a cap assembly of the secondary battery of FIG. 1A;
FIG. 1C is a partial perspective view of the cap assembly, taken along line I-I of FIG. 1B;
FIG. 1D is a perspective view showing the secondary battery of FIG. 1B, as assembled;
FIG. 1E is a cross-sectional view of the secondary battery taken along line II-II of FIG 1D;
FIG. 1F is a cross-sectional view showing a safety vent of FIG. 1E, when deformed;
FIG. 2 is a partial cross-sectional view of a secondary battery, in accordance with another exemplary embodiment of the present invention;
FIG. 3A is an exploded perspective view of a secondary battery, in accordance with an exemplary embodiment of the present invention;
FIG. 3B is a perspective view showing the secondary battery of FIG. 3A, as assembled;
FIG. 3C is a partial cross-sectional view of the secondary battery, taken along line III-III of FIG. 3B;
FIG. 3D is a partial cross-sectional view showing the operation of a current interrupt device, of the secondary battery shown in FIG. 3C;
FIG. 4A is a flowchart illustrating a method of manufacturing a secondary battery, in accordance with an exemplary embodiment of the present invention; and
FIGS. 4B to 4F illustrate the method shown in FIG. 4A.

Reference will now be made in detail to the exemplary embodiments of the present invention, examples of which are illustrated in the accompanying drawings, wherein like reference numerals refer to the like elements throughout. The exemplary embodiments are described below, in order to explain the aspects of the present invention, by referring to the figures.

As referred to herein, relative terms, such as "lower" or "bottom" and "upper" or "top," may be used herein to describe one element's relationship to other elements, as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompasses both an orientation of "lower" and "upper," depending of the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

As referred to herein, when a first element is said to be disposed "on", or adjacent to, a second element, the first element can directly contact the second element, or can be separated from the second element by one or more other elements can be located therebetween. In contrast, when an element is referred to as being disposed "directly on" another element, there are no intervening elements present. As used herein, the term "and/or" includes any and all combinations of one or more of the associated listed items.

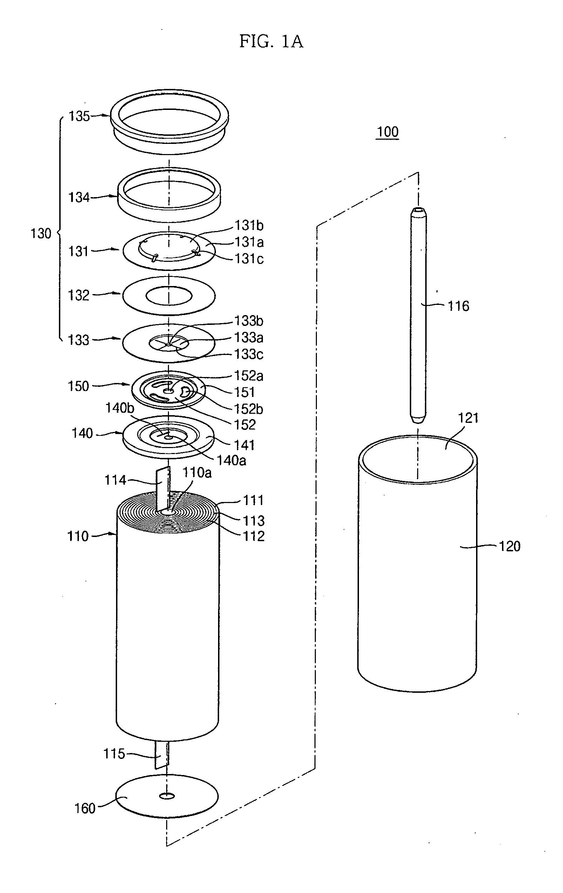

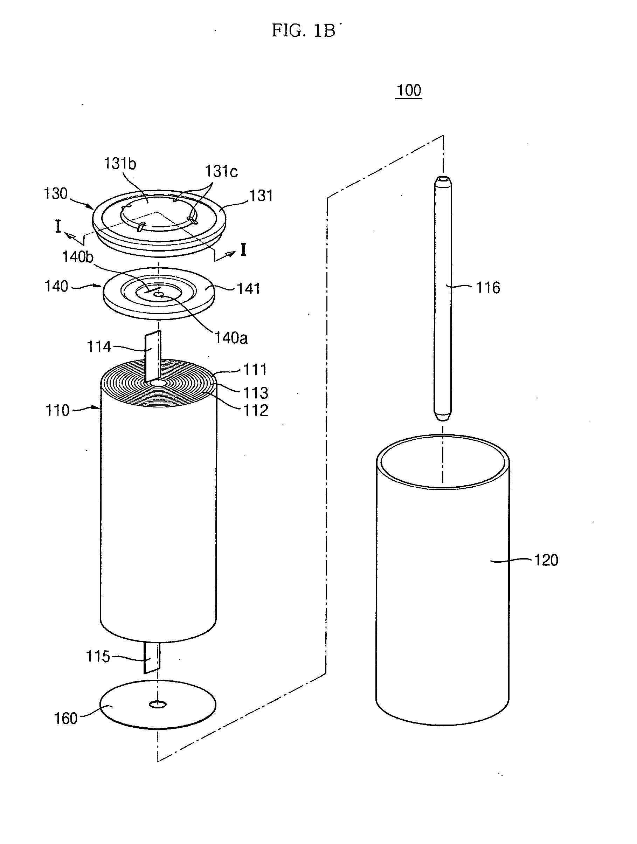

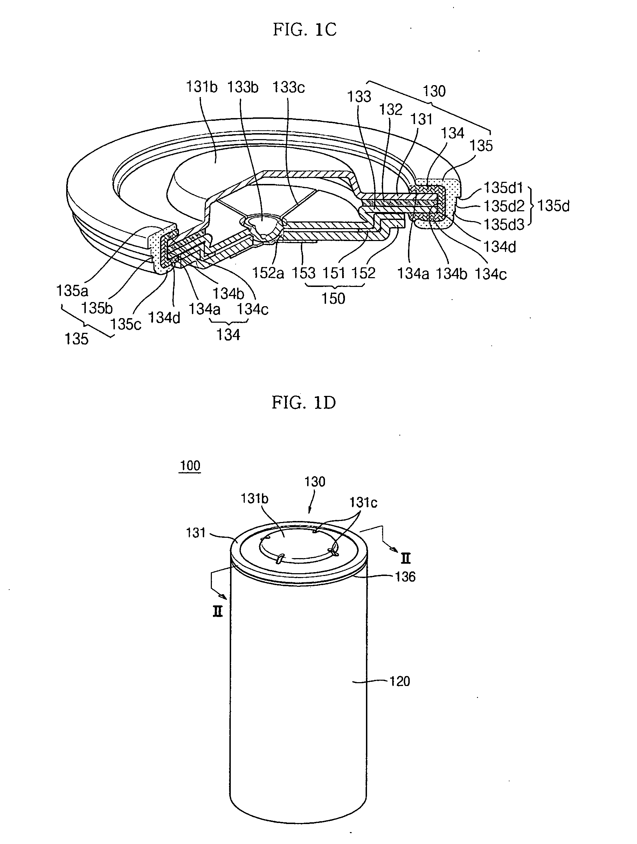

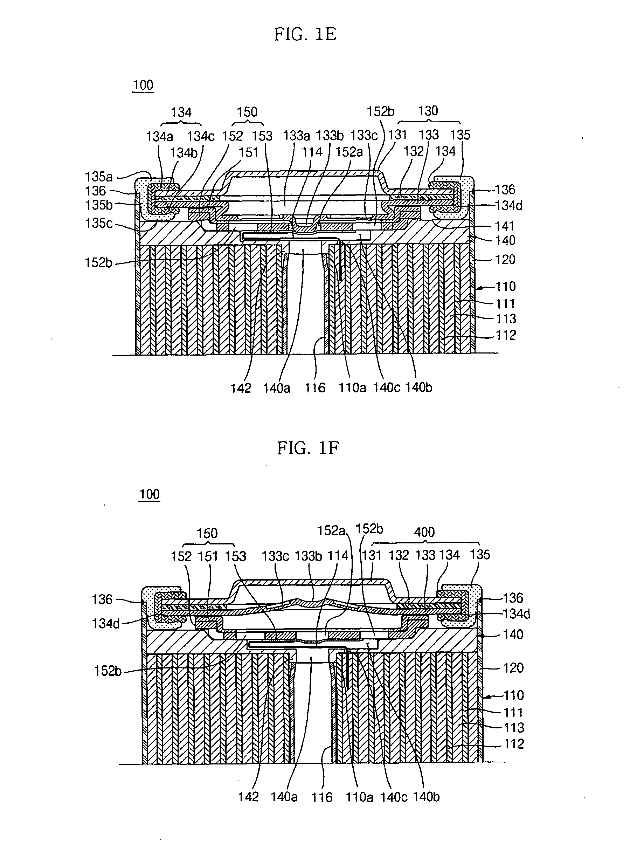

FIG. 1A is an exploded perspective view of a secondary battery 100, in accordance with an exemplary embodiment of the present invention. FIG. 1B is an exploded perspective view showing a cap assembly 130 of the secondary battery 100. FIG. 1C is a perspective view of the cap assembly 130, partially taken along line I-I of FIG. 1B. FIG. 1D is a perspective view showing the secondary battery 100 as assembled. FIG. 1E is a cross-sectional view of the secondary battery 100, taken along line II-II of FIG 1D. FIG. 1F is a cross-sectional view a safety vent 133 of FIG. 1E, when deformed.

As shown in FIGS. 1A to 1E, the secondary battery 100 includes an electrode assembly 110, a can 120, and a cap assembly 130. The secondary battery 100 may further include an insulating plate 140 and a sub-assembly 150. The electrode assembly 110 includes a positive plate 111, a negative plate 112, and a separator 113 disposed therebetween. The electrode assembly 110 is rolled into a jellyroll-type structure. The electrode assembly 110 may further include a positive tab 114 attached to the positive plate 111, and a negative tab 115 attached to the negative plate 112. A central hole 110a is formed in a central portion of the electrode assembly 110. A center pin 116 is inserted in to the central hole 110a, thus preventing the deformation of the electrode assembly 110.

The positive plate 111 comprises a positive current collector and a positive active material layer. The positive active material layer may comprise a layered compound containing lithium, a binder to increase a binding force between active material particles, and a conductive material to increase conductivity. The positive current collector is generally formed of aluminum, serves as a transfer path of electric charges generated from the positive active material layer, and supports the positive active material layer.

The negative plate 112 comprises a negative current collector and a negative active material layer. The negative active material layer may comprise a generally used hard-carbon containing carbon, or graphite, and a binder to increase a binding force between active material particles. The negative current collector is generally formed of copper, serves as a transfer path for electric charges generated from the negative active material layer, and supports the negative active material layer.

The separator 113 is disposed between the positive plate 111 and the negative plate 112, to insulate the positive plate 111 from the negative plate 112, and to transmit the electric charges of the positive plate 111 and the negative plate 112. Although the separator 113 is generally formed of polyethylene (PE), or polypropylene (PP), the material is not limited thereto in the present invention.

The can 120 includes an opening 121 formed on one end, to accommodate the electrode assembly 110. The can 120 may be formed of a metal, such as stainless steel. A lower insulating plate 160 is inserted into the lower surface of the can 120, to insulate the lower surface of the electrode assembly 110 from the can 120. The lower insulating plate 160 may include a hole, through which the negative tab 115 extends. The negative tab 115 may be electrically connected to the can 120.

The cap assembly 130 includes a cap member 131, a safety element 132, a safety vent 133, an insulating gasket 134, and a cap body 135. In the cap assembly 130 shown in FIGS. 1B and 1C, the cap member 131, the safety element 132, the safety vent 133, the insulating gasket 134, and the cap body 135 are integrally formed.

The cap member 131 includes a circular plate 131a, and a projection 131b projecting from the center of the circular plate 131 a. The cap member 131 may further include apertures 131c, through which gas is discharged. The cap member 131 may be formed of a metal, such as stainless steel.

The safety element 132 is disposed between the cap member 131 and the safety vent 133. The safety element 132 is a circular ring to electrically connect the cap member 131 to the safety vent 133. The safety element 132 may be a positive temperature coefficient (PTC) element, to cut off the current between the cap member 131 and the safety vent 133, when an over-current flows between the cap member 131 and the safety vent 133, or when the temperature between the cap member 131 and the safety vent 133 is increased beyond a threshold value, thereby preventing the secondary battery 100 from being overheated or exploding.

The safety vent 133 is disposed below the safety element 132. The safety vent 133 includes a projection 133a formed on the bottom thereof, a central groove 133b formed in the center of the projection 133a, and a cross groove 133c that crosses the central groove 133b. The safety vent 133 expands upward when the internal pressure of the can 120 is increased, and thus, the central groove 133b and the periphery of the cross groove 133c are broken. Accordingly, the safety vent 133 is opened to discharge gas from the can 120, thus preventing the secondary battery 100 from exploding.

FIG. 1F shows the safety vent 133 deformed by the internal pressure of the can 120, before the central groove 133b is broken. The safety vent 133 is formed of metal, to electrically connect the safety element 132 to the electrode assembly 110.

A portion of the outer circumference of the insulating gasket 134 is bent to surround the cap member 131 and the safety vent 133. The insulating gasket 134 shown in FIG. 1A has a bent upper end. As shown in FIG. 1C, the insulating gasket 134 includes a first insulating portion 134a, a second insulating portion 134b, and a third insulating portion 134c. The cap member 131 and the safety vent 133 are surrounded by the insulating gasket 134. The first insulating portion 134a surrounds an upper edge surface of the cap member 131, and the third insulating portion 134c surrounds a lower edge surface of the safety vent 133. The second insulating portion 134b surrounds the sides of the cap member 131 and the safety vent 133. The insulating gasket 134 may be formed of a resin material, such as polyethylene terephthalate (PET), or polyethylene (PE).

The insulating gasket 134 may further include a stopper 134d between the second insulating portion 134b and the third insulating portion 134c, which contacts the safety vent 133. The stopper 134d presses against the safety vent 133, to firmly fix the safety vent 133, the safety element 132, and the cap member 131 to the insulating gasket 134. The shape of the stopper 134d, as shown in FIGS. 1C and 1E corresponds to the shape of the cap body 135, after the cap body 135 is deformed by a clamping process.

The cap body 135 surrounds the insulating gasket 134, the cap member 131, and the safety vent 133. The cap body 135 includes a first bent portion 135a, a second bent portion 135c, and an outer circumferential portion 135b. The first bent portion 135a surrounds the first insulating portion 134a of the insulating gasket 134. The second bent portion 135c surrounds the third insulating portion 134c of the insulating gasket 134. The outer circumferential portion 135b connects the first bent portion 135a to the second bent portion 135c, and surrounds the second insulating portion 134b of the insulating gasket 134. A stepped portion 135d is formed on the outer surface of the outer circumferential portion 135b. The stepped portion 135d includes a first stepped portion 135d1, a second stepped portion 135d2 connected to the first stepped portion 135d1, and having a height greater than that of the first stepped portion 135d1, and a third stepped portion 135d3 connected to the second stepped portion 135d2, and having a height greater than that of the second stepped portion 135d2. The first stepped portion 135d1 comes in contact with the upper surface of the opening 121 of the can 120.

FIG. 1D shows a welding portion 136 formed on the outer circumference of the cap body 135, where the cap body 135 and the can 120 contact each other. The welding portion 136 may be formed where the cap body 135 and the can 120 are welded together. Accordingly, the welding portion 136 hermetically seals the cap assembly 130 and the can 120, to prevent an electrolyte from flowing out of the can 120, and to prevent the inside of the can 120 from being exposed to outside air.

The insulating plate 140 includes an upper projection 141 formed on the upper surface thereof. The upper projection 141 comes in contact with the second bent portion 135c of the cap body 135. In contrast, the lower surface of the insulating plate 140 comes in contact with the upper surface of the electrode assembly 110. Accordingly, the insulating plate 140 is fixed between the cap body 135 and the electrode assembly 110, thus securing the electrode assembly 110 in the can 120.

An aperture 140a is formed in the center of the insulating plate 140, to discharge gas from the electrode assembly 110, and to insert the electrolyte. A lower projection 142 may be formed on the periphery of the aperture 140a. The lower projection 142 is inserted into the central hole 110a of the electrode assembly 110, to connect the insulating plate 140 to the electrode assembly 110. The lower projection 142 secures the electrode assembly 110 in the can 120.

The insulating plate 140 may further include a receiving groove 140b, having a diameter greater than that of the aperture 140a. The positive tab 114 is inserted in the receiving groove 140b, and then folded. The receiving groove 140b prevents the positive tab 114 from being bent and/or broken during insertion.

The insulating plate 140 may further include a tab insertion hole 140c formed at the periphery of the aperture 140a. The positive tab 114 passes through the tab insertion hole 140c. The tab insertion hole 140c prevents the positive tab 114, which is inserted through the tab insertion hole 140c and folded, from being shorted to the top of the electrode assembly 110. Since the tab insertion hole 140c prevents a portion of the positive tab 114 from being moved, it is possible to prevent fatigue caused by external impacts or vibrations. If the tab insertion hole 140c is not provided, the positive tab 114 may pass through the central hole 110a.

The sub-assembly 150 is disposed on the lower surface of the safety vent 133. The sub-assembly 150 may comprise an insulating plate 151, a main plate 152 adhered to the insulating plate 151, and a sub-plate 153 connected to the main plate 152.

The insulating plate 151 insulates the safety vent 133 from the main plate 152. The insulating plate 151 may be formed only on the outer circumference of the main plate 152, to insulate the safety vent 133 from the main plate 152.

The main plate 152 includes a lower projection having a diameter smaller than that of the main plate 152, and a central hole 152a formed in the center of the lower projection. Holes 152b to discharge gas from the can 120 are formed around the central hole 152a.

The sub-plate 153 is connected to the bottom of the main plate 152, to cover the central hole 152a of the main plate 152. The sub-plate 153 is connected to the central groove 133b of the safety vent 133, and electrically connected to the safety vent 133. The sub-plate 153 may be welded to the central groove 133b of the safety vent 133, by ultrasonic welding. Referring to FIG. 1F, the safety vent 133 may be deformed by the internal pressure of the can 120, and electrically disconnected from the sub-plate 153. The lower surface of the sub-plate 153 is welded to the positive tab 114, so as to be electrically connected thereto.

As described above, the sub-assembly 150 is partially insulated from the safety vent 133, by the insulating plate 151. The sub-plate 153 electrically connects the positive tab 114 to the safety vent 133. Referring back to FIG. 1F, when the internal pressure of the can 120 is increased beyond a threshold value, the periphery of the central groove 133b of the safety vent 133 is deformed upward. In this case, as the periphery of the central groove 133b is broken, the safety vent 133 discharges the gas from the can 120. The safety vent 133 is electrically disconnected from the sub-plate 153, by the deformation of the central groove 133b. Accordingly, the safety of the secondary battery is increased by the sub-assembly 150, and the assembling workability is improved, by the combination of the integrally formed cap assembly 130 and the can 120.

The can 120 is formed in a cylindrical shape. The cap assembly 130 is formed into a cylindrical body. In particular, the cap assembly 130 has a structure capable of being clamped by a single process. Since the cylindrical secondary battery 100 has a welding portion, formed where the can 120 and the cap assembly 130 are in contact with each other, the sealing force is increased, and a welding process is simplified.

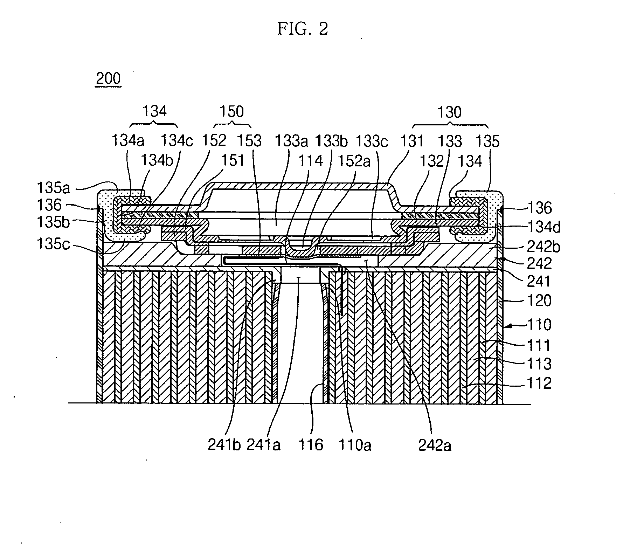

FIG. 2 is a partial cross-sectional view of a secondary battery 200, in accordance another exemplary embodiment of the present invention. As shown in FIG. 2, the secondary battery 200 includes an electrode assembly 110, a can 120, and a cap assembly 130. The secondary battery 200 may further include an upper insulating plate 241, and an incombustible elastic member 242 disposed between the upper insulating plate 241 and the cap assembly 130. Since the electrode assembly 110, the can 120, and the cap assembly 130 are described above, a description thereof is omitted.

The upper insulating plate 241 is placed on the upper surface of the electrode assembly 110, to insulate the upper surface of the electrode assembly 110 from the cap assembly 130. The upper insulating plate 241 is formed in a circular planar shape, and includes a hole 241 a formed in the center thereof. The upper insulating plate 241 further includes a projection 241b projecting downward from the periphery of the hole 241 a. The projection 241 b is inserted into the central hole 110a of the electrode assembly 110, and connected to the electrode assembly 110, thus increasing the bond-ability to the electrode assembly 110.

The incombustible elastic member 242 is placed on the top of the upper insulating plate 241. The incombustible elastic member 242 includes a hole 242a formed in the center thereof. The hole 242a provides a space, in which the positive tab 114 is inserted and folded. The incombustible elastic member 242 further includes an upper projection 242b formed on the upper circumference thereof. The upper projection 242b comes in contact with the cap body 135, and may be pressed by the second bent portion 135c of the cap body 135. Accordingly, the upper insulating plate 241 can press the upper surface of the electrode assembly 110. Thus, the electrode assembly 110 is prevented from being moved. Since the incombustible elastic member 242 absorbs impacts applied to the electrode assembly 110, the electrode assembly 110 is further prevented from moving.

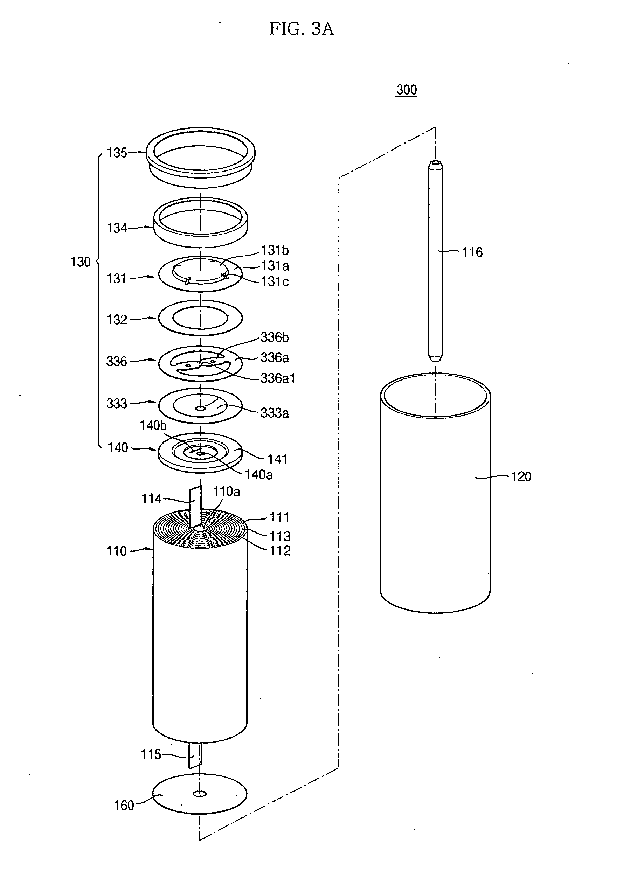

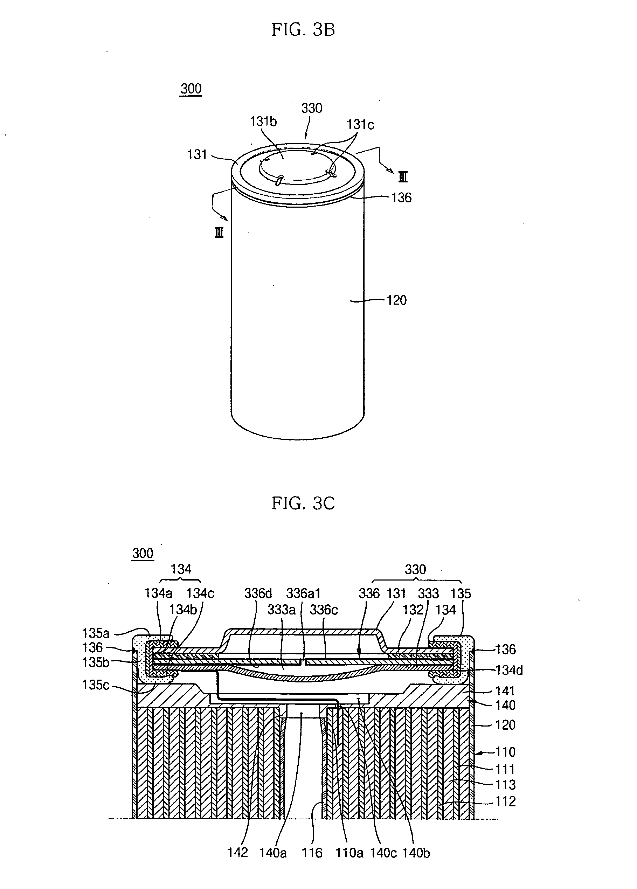

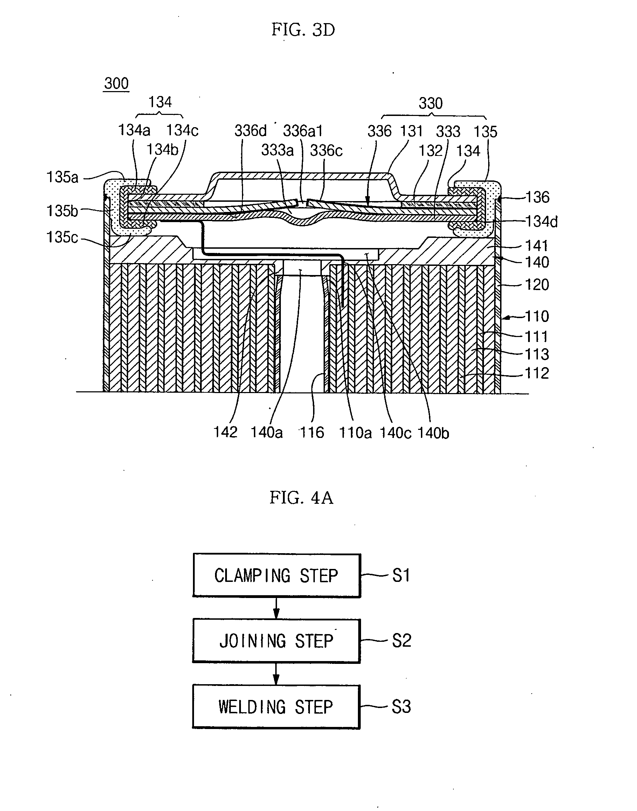

FIG. 3A is an exploded perspective view of a secondary battery 300, in accordance with an exemplary embodiment of the present invention. FIG. 3B is a perspective view showing the secondary battery 300 as assembled. FIG. 3C is a partial cross-sectional view of the secondary battery 300, taken along line III-III of FIG. 3B. FIG. 3D is a partial cross-sectional view showing a current interrupt device 336 of the secondary battery 300.

As shown in FIGS. 3A to 3D, the secondary battery 300 includes an electrode assembly 110, a can 120, and a cap assembly 330. The cap assembly 330 includes a cap member 131, a safety element 132, a safety vent 333, an insulating gasket 134, a cap body 135, and a current interrupt device 336. In this exemplary embodiment, the safety element 132 will be described with reference to a PTC element.

The current interrupt device 336 includes a ring-shaped edge board 336a, and a cross board 336b crossing the edge board 336a. The current interrupt device 336 includes an upper circuit pattern 336c formed on the top of the and cross board 336b and edge board 336a, and a lower circuit pattern 336d formed on the bottom of the cross board 336b and the edge board 336a. The upper circuit pattern 336c and the lower circuit pattern 336d may be electrically connected, through a hole 336a1 formed in the center of the cross board 336b, or through a lateral portion thereof.

The safety vent 333 includes a projection groove 333a that is adhered to the lower surface of the current interrupt device 336. Referring to FIG. 3D, when the internal pressure of the can 120 is increased beyond a threshold value, the circumference of the projection groove 333a projects upward, and thus, the safety vent 333 breaks the center of the cross board 336b. Accordingly, the safety vent 333 is electrically disconnected from the safety element 132, and the current flow is cut off. In this case, the center of the safety vent 333 is broken, to discharge gas from the can 120. FIG. 3D shows the state in which the center of the safety vent 333 is not yet broken.

In the above-described secondary battery 300, gas generated inside the can 120 is discharged to the outside, by the opening of the safety vent 333, to prevent the secondary battery 300 from exploding. Since the current interrupt device 336 is broken by the deformation of the safety vent 333, the cap member 131 is electrically disconnected from the positive plate 111.

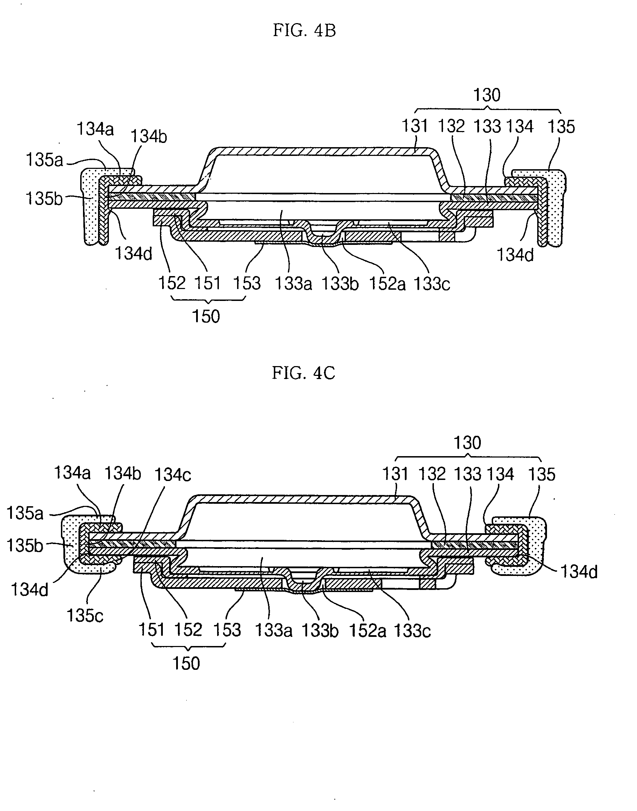

FIG. 4A is a flowchart illustrating a method of manufacturing the secondary battery 300, in accordance with an exemplary embodiment of the present invention, and FIGS. 4B to 4F are diagrams illustrating the method shown in FIG. 4A. As shown in FIG. 4A, the method of manufacturing the secondary battery includes a clamping operation S1, a joining operation S2, and a welding operation S3.

As shown in FIG. 4B, in the clamping operation S1, the cap member 131, the safety element 132, and the safety vent 133 are sequentially inserted into the first insulating portion 134a of the insulating gasket 134. The first bent portion 135a of the cap body 135 surrounds the first insulating portion 134a. The sub-plate 153 of the sub-assembly 150 may be electrically connected to the central groove 133b of the safety vent 133, by ultrasonic welding, for example. Then, as shown in FIG. 4C, the second bent portion 135c of the cap body 135 is formed. The second bent portion 135c is closely adhered to the top of the cap member 131, and to the bottom of the safety vent 133.

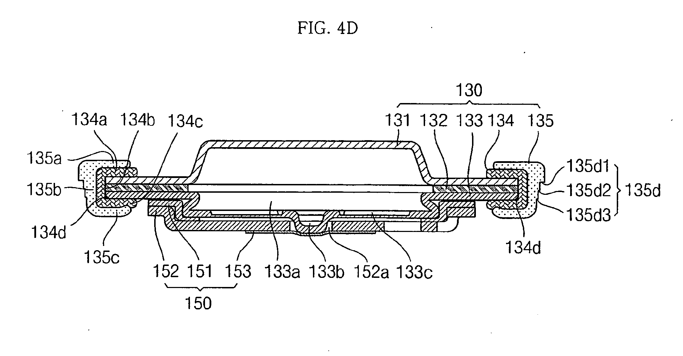

As shown in FIG. 4D, the outer circumferential portion 135b of the cap body 135 is formed, and a pressing process is performed to form the stepped portion 135d of the outer circumferential portion 135b. The stepped portion 135d includes the first stepped portion 135d1, the second stepped portion 135d2, and the third stepped portion 135d3. The first stepped portion 135d1 provides a surface with which the opening of the can 120 comes in contact, and the second and third stepped portions 135d2 and 135d3 prevent excessive plastic deformation of the first stepped portion 135d1, by the pressing process.

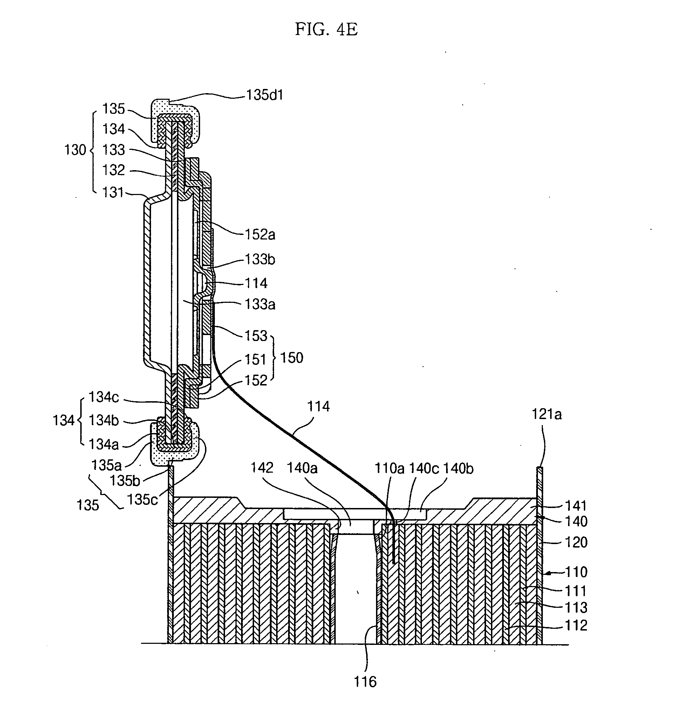

As shown in FIG. 4E, in the joining operation S2, the sub-plate 153 of the cap assembly 130 and the positive tab 114 of the electrode assembly 110 are bonded by welding, for example. The negative tab (not shown), of the electrode assembly 110 is electrically connected to the inside of the can 120. An electrolyte may be filled in the inside of the can 120, to cover the electrode assembly 110. Subsequently, the cap assembly 130 is joined to the opening of the can 120. An upper surface 121a of the opening of the can 120 is closely adhered to the first stepped portion 135d1. Consequently, as shown in FIG. 1E, the cap assembly 130 is joined to the opening of the can 120.

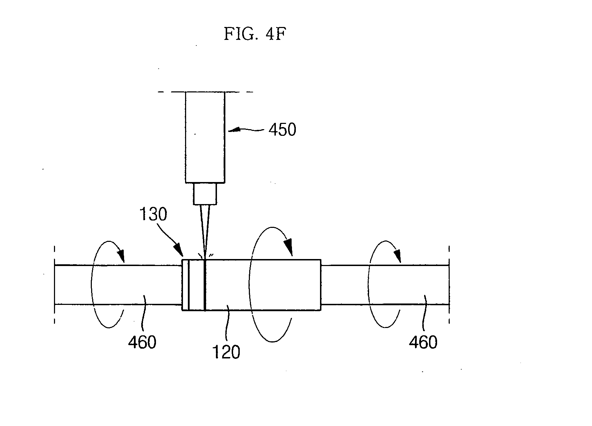

As shown in FIG. 4F, in the welding operation S3, the welding is carried out, by radiating a laser beam onto where the opening of the can 120 contacts the cap assembly 130, using a laser welding device 450. The cap assembly 130 and the can 120 may be rotated by a jig device 460, during the welding process, and thus, the welding efficiency is improved, and the welding time is reduced.

According to the above operations S1, S2, and S3, since the number of manufacturing processes can be reduced, compared to that of the conventional method, the yield can be increased, and the safety thereof can be ensured. The manufacturing costs can also be reduced, thus gaining a competitive advantage.

In the clamping operation S1, where the cap member 131, the safety element 132, and the safety vent 133 are sequentially joined to the first insulating portion 134a of the insulating gasket 134, the stopper 134d, formed inside the insulating gasket 134, may press against the lower outer circumference of the safety vent 133. The stopper 134d, as shown in FIG. 4B secures the safety vent 133, in a state where the cap member 131, the safety element 132 and the safety vent 133 are closely adhered to the first insulating portion 134a of the insulating gasket 134. Accordingly, the cap member 131, the safety element 132, and the safety vent 133 are fixed by the stopper 134d.

As shown in FIG. 4C, the cap body 135 is subjected to the clamping process, in which the second bent portion 135c is formed, while the cap member 131, the safety element 132, and the safety vent 133 are secured by the stopper 134d. Accordingly, the stopper 134d can reduce assembling errors when the cap body 135 is clamped, thus increasing the yield and reliability of the secondary battery 300.

As described above, the secondary battery and the method of manufacturing the same provide the following effects.
1) It is possible to simplify the assembly process with the integrally formed cap assembly joined to the can.
2) Since the conventional beading process of the can is eliminated, it is possible to prevent metallic foreign material from being introduced into the can, due to the beading process.
3) It is possible to change the sealing pressure of the can from 20-30 kgf/cm2, to more than 30 kgf/cm2, without imposing any restriction on the design, due to the internal pressure of the can.
4) Since the dead space in the can is reduced, as compared to the conventional battery, the internal gas can be readily discharged to the outside, thus having an advantageous effect in preventing overcharges.
5) Since the conventional beading process of the can is eliminated, it is possible to increase the internal space, thus increasing the capacity of the battery.
6) It is not necessary to apply a flash plating process, for preventing the cut portion of the opening of the can from corroding.
7) Since the cap assembly is integrally managed as a single component, the component codes and component inspection are simplified, and the process management elements are remarkably reduced.
8) Since the electrolyte can be injected into the secondary battery in a state where the upper insulating plate is drawn to the outside, it is possible to increase the injection and humidification properties of the electrode assembly. Accordingly, the uniformity of the battery is increased, to reduce the voltage deviation in open charge voltage (OCV), and the lifespan of the battery is increased due to an improvement of cycle characteristics.
9) Since the insulating plate can be fixed between the cap assembly and the electrode assembly, it is possible to prevent the electrode assembly from being moved.

## Claims

1. A secondary battery comprising:
an electrode assembly (110);
a can (120) to house the electrode assembly, having an opening; and
a cap assembly (130) to seal the opening, comprising:
a cap member (131),
a safety element (132) disposed below the cap member,
a safety vent (133, 333) disposed below the safety element,
an insulating gasket (134) surrounding the cap member, the safety element, and the safety vent, and
a cap body (135) attached to the can, to clamp the insulating gasket around the cap member (131), the safety element (132), and the safety vent (133), wherein the insulating gasket (134) comprises:
a first insulating portion (134a) disposed around an upper edge surface of the cap member;
a second insulating portion (134b) disposed around edges of the cap member and the safety vent; and
a third insulating portion (134c) disposed around a lower edge surface of the safety vent; and
wherein the cap body (135) comprises:
a first bent portion (135a) disposed around the first insulating portion;
a second bent portion (135c) disposed around the third insulating portion; and
an outer circumferential portion (135b) connecting the first bent portion to the second bent portion, disposed around the second insulating portion;
the secondary battery further comprising an insulating plate (140) having an aperture (140a) formed in the center thereof, and disposed in contact with the second bent portion (135c) of the cap body and the upper surface of the electrode assembly (110).

2. The secondary battery of claim 1, wherein the insulating gasket comprises a stopper projecting from an intersection of the second insulating portion and the third insulating portion, to secure the cap member, the safety element, and the safety vent in the insulating gasket.

3. The secondary battery of claim 1 or 2, wherein the cap body comprises:
a stepped portion disposed on the outer circumferential portion, adjacent to the opening of the can; and
a welding portion formed where the stepped portion of the cap body is welded to the opening of the can.

4. The secondary battery of any one of the preceding claims, wherein the insulating plate comprises:
an upper projection disposed on the second bent portion of the cap body; and
a lower projection that extends toward the electrode assembly, from an edge of the aperture.

5. The secondary battery of any one of the preceding claims, wherein the insulating plate has a receiving groove having a diameter that is greater than the diameter of the aperture, formed in the center thereof.

6. The secondary battery of any one of the preceding claims, wherein the insulating plate further comprises a tab insertion hole formed adjacent to the aperture.

7. The secondary battery of claim 1, further comprising a sub-assembly (150) comprising:
a second insulating plate (151) disposed below the safety vent (133);
a main plate (152) disposed below the second insulating plate; and
a sub-plate (153) disposed below the main plate, wherein
the second insulating plate insulates the safety vent from the main plate, and
the sub-plate is connected to the safety vent, and is electrically connected to the electrode assembly.

8. A secondary battery according to any one of the preceding claims, comprising:
a current interrupt device (336) disposed between the safety vent (333) and the safety element (132),
wherein the insulating gasket (134) is disposed around the cap member (131), the safety element (132), the safety vent (333), and the current interrupt device (336), and
the cap body (135) is arranged to clamp the insulating gasket around the cap member (131), the safety element (132), the safety vent (333) and the current interrupt device (336).

9. The secondary battery of claim 8, wherein the current interrupt device comprises:
an edge board;
a cross board disposed across the edge board;
an upper circuit pattern formed on upper surfaces of the edge board and electrically connected to the safety element; and
a lower circuit pattern formed on lower surfaces of the edge board, and electrically connected to the safety vent, wherein,
the upper circuit pattern and the lower circuit pattern are electrically connected in the center of the cross board, and
the safety vent is disposed to break the center of the cross board, if an internal pressure of the can reaches a certain pressure.

10. A method of manufacturing a secondary battery according to any one of the preceding claims, the method comprising:
clamping a cap body (135) around an insulating gasket (134) that surrounds a cap member (131), a safety element (132), and a safety vent (133, 333), to form a cap assembly (130);
electrically connecting an electrode assembly, which is housed in a can, to the cap assembly, and sealing an opening of the can with the cap assembly; and
welding the can to the cap body.

11. The method of claim 10, further comprising inserting a current interrupt device (336) between the safety element (132) and the safety vent (333), prior to the clamping.

12. The method of claim 10 or 11, further comprising attaching a sub-assembly (150) to the safety vent, prior to the clamping.

13. The method of claim 10, 11 or 12, comprising using a stopper (134d) formed inside the insulating gasket, to fix the cap member, the safety element, and the safety vent to the insulating gasket, prior to the clamping.

14. The method of any one of claims 10 to 13, wherein the welding comprises laser welding the can to the cap assembly, while rotating the secondary battery with respect to a laser that is performing the laser welding.

## Patentansprüche

1. Sekundärbatterie, aufweisend:
eine Elektrodenanordnung (110);
eine Dose (120) zur Aufnahme der Elektrodenanordnung, die eine Öffnung aufweist; und
eine Deckelanordnung (130) zur Abdichtung der Öffnung, aufweisend:
ein Deckelelement (131),
ein Sicherheitselement (132), das unterhalb des Deckelelements angeordnet ist,
eine Sicherheitslüftung (133, 333), die unterhalb des Sicherheitselements angeordnet ist,
eine isolierende Dichtung (134), die das Deckelelement, das Sicherheitselement und die Sicherheitslüftung umgibt, und
einen Deckelkörper (135), der an der Dose befestigt ist, zum Festklemmen der isolierenden Dichtung um das Deckelelement (131), das Sicherheitselement (132) und die Sicherheitslüftung (133),
wobei die isolierende Dichtung (134) aufweist:
einen ersten Isolierbereich (134a), der um eine obere Randfläche des Deckelelements herum angeordnet ist,
einen zweiten Isolierbereich (134b), der um Ränder des Deckelelements und der Sicherheitslüftung herum angeordnet ist; und
einen dritten Isolierbereich (134c), der um eine untere Randfläche der Sicherheitslüftung herum angeordnet ist; und
wobei der Deckelkörper (135) aufweist:
einen ersten gebogenen Bereich (135a), der um den ersten Isolierbereich herum angeordnet ist;
einen zweiten gebogenen Bereich (135c), der um den dritten Isolierbereich herum angeordnet ist; und
einen äußeren Umfangsbereich (135b), der den ersten gebogenen Bereich mit dem zweiten gebogenen Bereich verbindet und um den zweiten Isolierbereich herum angeordnet ist;
wobei die Sekundärbatterie weiterhin eine Isolierplatte (140) aufweist, die eine in ihrer Mitte ausgebildete Öffnung (140a) aufweist und in Kontakt mit dem zweiten gebogenen Bereich (135c) des Deckelkörpers und der Oberseite der Elektrodenanordnung (110) angeordnet ist.

2. Sekundärbatterie nach Anspruch 1, wobei die isolierende Dichtung einen Stopfen aufweist, der von einer Schnittstelle des zweiten Isolierbereichs und des dritten Isolierbereichs hervorragt, so dass das Deckelelement, das Sicherheitselement und die Sicherheitslüftung in der isolierenden Dichtung befestigt sind.

3. Sekundärbatterie nach Anspruch 1 oder 2, wobei der Deckelkörper aufweist:
einen gestuften Bereich, der auf dem äußeren Umfangsbereich benachbart zur Öffnung der Dose angeordnet ist; und
einen Schweißbereich, der dort ausgebildet ist, wo der gestufte Bereich des Deckelkörpers mit der Öffnung der Dose verschweißt ist.

4. Sekundärbatterie nach einem der vorhergehenden Ansprüche, wobei die Isolierplatte aufweist:
einen oberen Vorsprung, der auf dem zweiten gebogenen Bereich des Deckelkörpers angeordnet ist; und
einen unteren Vorsprung, der sich von einem Rand der Öffnung zur Elektrodenanordnung hin erstreckt.

5. Sekundärbatterie nach einem der vorhergehenden Ansprüche, wobei die Isolierplatte eine in ihrer Mitte ausgebildete Aufnahmenut aufweist, die einen Durchmesser aufweist, der größer als der Durchmesser der Öffnung ist.

6. Sekundärbatterie nach einem der vorhergehenden Ansprüche, wobei die Isolierplatte weiterhin ein Einsetzloch für eine Anschlussfahne aufweist, das benachbart zur Öffnung ausgebildet ist.

7. Sekundärbatterie nach Anspruch 1, weiterhin aufweisend eine Unteranordnung (150), aufweisend:
eine zweite Isolierplatte (151), die unterhalb der Sicherheitslüftung (133) angeordnet ist;
eine Hauptplatte (152), die unterhalb der zweiten Isolierplatte angeordnet ist; und
eine Unterplatte (153), die unterhalb der Hauptplatte angeordnet ist, wobei
die zweite Isolierplatte die Sicherheitslüftung gegenüber der Hauptplatte isoliert, und
die Unterplatte mit der Sicherheitslüftung verbunden ist und mit der Elektrodenanordnung elektrisch verbunden ist.

8. Sekundärbatterie nach einem der vorhergehenden Ansprüche, aufweisend:
eine Stromunterbrechungsvorrichtung (336), die zwischen der Sicherheitslüftung (333) und dem Sicherheitselement (132) angeordnet ist,
wobei die isolierende Dichtung (134) um das Deckelelement (131), das Sicherheitselement (132), die Sicherheitslüftung (333) und die Stromunterbrechungsvorrichtung (336) herum angeordnet ist, und
der Deckelkörper (135) derart angeordnet ist, dass er die isolierende Dichtung um das Deckelelement (131), das Sicherheitselement (132), die Sicherheitslüftung (333) und die Stromunterbrechungsvorrichtung (336) herum festklemmt.

9. Sekundärbatterie nach Anspruch 8, wobei die Stromunterbrechungsvorrichtung aufweist:
eine Randplatte;
eine Querplatte, die quer über der Randplatte angeordnet ist;
ein oberes Schaltungsmuster, das auf Oberseiten der Randplatte ausgebildet ist und mit dem Sicherheitselement elektrisch verbunden ist; und
ein unteres Schaltungsmuster, das auf Unterseiten der Randplatte ausgebildet ist und mit der Sicherheitslüftung elektrisch verbunden ist, wobei
das obere Schaltungsmuster und das untere Schaltungsmuster mit der Mitte der Querplatte elektrisch verbunden sind, und
die Sicherheitslüftung derart angeordnet ist, dass sie die Mitte der Querplatte bricht, wenn ein Innendruck der Dose einen bestimmten Druck erreicht.

10. Verfahren zur Herstellung einer Sekundärbatterie nach einem der vorhergehenden Ansprüche, wobei das Verfahren aufweist:
Festklemmen eines Deckelkörpers (135) um eine isolierende Dichtung (134), die ein Deckelelement (131), ein Sicherheitselement (132) und eine Sicherheitslüftung (133, 333) umgibt, zur Ausbildung einer Deckelanordnung (130);
elektrisches Verbinden einer Elektrodenanordnung, die in einer Dose aufgenommen ist, mit der Deckelanordnung und Abdichtung einer Öffnung der Dose mit der Deckelanordnung; und
Verschweißen der Dose mit dem Deckelkörper.

11. Verfahren nach Anspruch 10, weiterhin aufweisend das Einsetzen einer Stromunterbrechungsvorrichtung (336) zwischen dem Sicherheitselement (132) und der Sicherheitslüftung (333) vor dem Festklemmen.

12. Verfahren nach Anspruch 10 oder 11, weiterhin aufweisend das Befestigen einer Unteranordnung (150) an der Sicherheitslüftung vor dem Festklemmen.

13. Verfahren nach Anspruch 10, 11 oder 12, aufweisend die Verwendung eines Stopfens (134d), der in der isolierenden Dichtung ausgebildet ist, zum Fixieren des Deckelelements, des Sicherheitselements und der Sicherheitslüftung an der isolierenden Dichtung vor dem Festklemmen.

14. Verfahren nach einem der Ansprüche 10 bis 13, wobei das Verschweißen das Laserschweißen der Dose mit der Deckelanordnung aufweist, während die Sekundärbatterie bezüglich eines Lasers, der das Laserschweißen durchführt, gedreht wird.

## Revendications

1. Batterie d'accumulateurs comprenant :
un ensemble d'électrodes (110) ;
un bac (120) pour recevoir l'ensemble d'électrodes, ayant une ouverture ; et
un ensemble de capot (130) pour fermer hermétiquement l'ouverture, comprenant :
un élément de capot (131),
un élément de sécurité (132) disposé sous l'élément de capot,
un évent de sécurité (133, 333) disposé sous l'élément de sécurité,
un joint d'isolation (134) entourant l'élément de capot, l'élément de sécurité et l'évent de sécurité, et
un corps de capot (135) fixé au bac, pour serrer le joint d'isolation autour de l'élément de capot (131), de l'élément de sécurité (132) et de l'évent de sécurité (133), dans laquelle le joint d'isolation (134) comprend :
une première partie d'isolation (134a) disposée autour d'une surface de bord supérieure de l'élément de capot ;
une seconde partie d'isolation (134b) disposée autour de bords de l'élément de capot et de l'évent de sécurité ; et
une troisième partie d'isolation (134c) disposée autour d'une surface de bord inférieure de l'évent de sécurité ; et
dans lequel le corps de capot (135) comprend:
une première partie fléchie (135a) disposée autour de la première partie d'isolation ;
une seconde partie fléchie (135c) disposée autour de la troisième partie d'isolation ; et
une partie circonférentielle externe (135b) reliant la première partie fléchie à la seconde partie fléchie, disposée autour de la seconde partie d'isolation ;
la batterie d'accumulateurs comprenant en outre une plaque d'isolation (140) ayant une ouverture (140a) formée en son centre, et disposée en contact avec la seconde partie fléchie (135c) du corps de capot et la surface supérieure de l'ensemble d'électrodes (110).

2. Batterie d'accumulateurs de la revendication 1, dans laquelle le joint d'isolation comprend un élément d'arrêt se projetant d'une intersection de la seconde partie d'isolation et de la troisième partie d'isolation, pour fixer l'élément de capot, l'élément de sécurité et l'évent de sécurité dans le joint d'isolation.

3. Batterie d'accumulateurs des revendications 1 ou 2, dans laquelle le corps de capot comprend :
une partie étagée disposée sur la partie circonférentielle externe, adjacente à l'ouverture du bac ; et
une partie de soudure formée à l'endroit où la partie étagée du corps de capot est soudée à l'ouverture du bac.

4. Batterie d'accumulateurs de l'une quelconque des revendications précédentes, dans laquelle la plaque d'isolation comprend :
une projection supérieure disposée sur la seconde partie fléchie du corps de capot ; et
une projection inférieure qui s'étend vers l'ensemble d'électrodes, en partant d'un bord de l'ouverture.

5. Batterie d'accumulateurs de l'une quelconque des revendications précédentes, dans laquelle la plaque d'isolation possède une rainure de réception ayant un diamètre qui est plus grand que le diamètre de l'ouverture, formée en son centre.

6. Batterie d'accumulateurs de l'une quelconque des revendications précédentes, dans laquelle la plaque d'isolation comprend en outre un trou d'insertion de languette formé adjacent à l'ouverture.

7. Batterie d'accumulateurs de la revendication 1, comprenant en outre un sous-ensemble (150) comprenant :
une seconde plaque d'isolation (151) disposée sous l'évent de sécurité (133) ;
une plaque principale (152) disposée sous la seconde plaque d'isolation ; et
une sous-plaque (153) disposée sous la plaque principale ; où
la seconde plaque d'isolation isole l'évent de sécurité de la plaque principale, et
la sous-plaque est reliée à l'évent de sécurité, et est connectée électriquement à l'ensemble d'électrodes.

8. Batterie d'accumulateurs selon l'une quelconque des revendications précédentes, comprenant :
un dispositif d'interruption de courant (336) disposé entre l'évent de sécurité (333) et l'élément de sécurité (132),
où le joint d'isolation (134) est disposé autour de l'élément de capot (131), de l'élément de sécurité (132), de l'évent de sécurité (333) et du dispositif d'interruption de courant (336), et
le corps de capot (135) est agencé de sorte à serrer le joint d'isolation autour de l'élément de capot (131), de l'élément de sécurité (132), de l'évent de sécurité (333) et du dispositif d'interruption de courant (336).

9. Batterie d'accumulateurs de la revendication 8, dans laquelle le dispositif d'interruption de courant comprend :
une carte de bordure ;
une carte de travers disposée à travers la carte de bordure ;
un modèle de circuit supérieur formée sur des surfaces supérieures de la carte de bordure et connecté électriquement à l'élément de sécurité ; et
un modèle de circuit inférieur formé sur des surfaces inférieures sur la carte de bordure, et connecté électriquement à l'évent de sécurité, où
le modèle de circuit supérieur et le modèle de circuit inférieur sont connectés électriquement au centre de la carte de travers, et
l'évent de sécurité est disposé pour rompre le centre de la carte de travers, si une pression interne du bac atteint une certaine pression.

10. Procédé de fabrication d'une batterie d'accumulateurs selon l'une quelconque des revendications précédentes, le procédé comprenant le fait :
de serrer un corps de capot (135) autour d'un joint d'isolation (134) qui entoure un élément de capot (131), un élément de sécurité (132) et un évent de sécurité (133, 333) pour former un ensemble de capot (130) ;
connecter électriquement un ensemble d'électrodes, qui est reçu dans un bac, à l'ensemble de capot, et fermer hermétiquement une ouverture du bac avec l'ensemble de capot ; et
souder le bac au corps de capot.

11. Procédé de la revendication 10, comprenant en outre le fait d'insérer un dispositif d'interruption de courant (336) entre l'élément de sécurité (132) et l'évent de sécurité (333) avant le serrage.

12. Procédé de la revendication 10 ou 11, comprenant en outre le fait de fixer un sous-ensemble (150) à l'évent de sécurité avant le serrage.

13. Procédé de la revendication 10, 11 ou 12, comprenant le fait d'utiliser un élément d'arrêt (134d) formé à l'intérieur du joint d'isolation, pour fixer l'élément de capot, l'élément de sécurité et l'évent de sécurité au joint d'isolation avant le serrage.

14. Procédé de l'une quelconque des revendications 10 à 13, dans lequel le soudage comprend le fait de souder au laser le bac à l'ensemble de capot, tout en faisant tourner la batterie d'accumulateurs par rapport à un laser qui réalise la soudure au laser.
